Europäisches Patentamt

European Patent Office

Office européen des brevets

(11) Publication number: **0 373 818**
**A2**

## (12) EUROPEAN PATENT APPLICATION

(21) Application number: **89312686.2**

(22) Date of filing: **06.12.89**

(51) Int. Cl.⁵: **F16K 15/20**

(30) Priority: **07.12.88 GB 8828572**

(43) Date of publication of application:
**20.06.90 Bulletin 90/25**

(84) Designated Contracting States:
**BE DE FR IT NL**

(71) Applicant: **Jaw, Hong-Cheng**
**6th Fl. No.21 Alley 29 Lane 372 Sec. 5**
**Chungsiao E Rd.**
**Taipei(TW)**

(72) Inventor: **Jaw, Hong-Cheng**
**6th Fl. No.21 Alley 29 Lane 372 Sec. 5**
**Chungsiao E Rd.**
**Taipei(TW)**

(74) Representative: **Thomson, Roger Bruce et al**
**POLLAK MERCER & TENCH Eastcheap**
**House Central Approach**
**Letchworth Hertfordshire SG6 3DS(GB)**

(54) **Air nozzle for inflatable articles.**

(57) An air nozzle for inflatable articles comprises an air hole (12) having a plug (20) arranged at the top, the lower portion of said air hole forming a horn-shaped nozzle seat (10), said nozzle seat comprising a non-return diaphragm (40) extending radially and covering the bottom end of the air hole to prevent air escaping through the air hole. The non-return diaphragm (40) will break away from the bottom end of the air hole to let the internal air be exhausted if the air nozzle is pressed downwards to turn the nozzle seat upside down. A self-locking belt (30) on the outer wall of the air hole comprises a nose (31) on one side and a serrated surface (32) on the other side. The belt nose (31) and serrated surface (32) are insertable into two holes (23) in an extension (22) of the plug so that the nose and serrated surface keep the plug tightly in place to block the air hole and to prevent the internal air escaping due to the plug dropping from the air hole. The non-return diaphragm (40) and the self-locking belt (30) are preferably integral parts of the air nozzle.

FIG. 4

# AIR NOZZLE FOR INFLATABLE ARTICLES

An improved structure of air nozzle for inflatable articles and, more particularly an air nozzle having a non-return diaphragm thereinside to control the air passage of an inflatable article, and a self-locking belt set on its outer-wall to prevent its air plug from breaking away.

Plastic made inflatable toys, beach rings, beach balls and air cushions etc., are very popularly, for which an air nozzle should be provided to control the air passage.

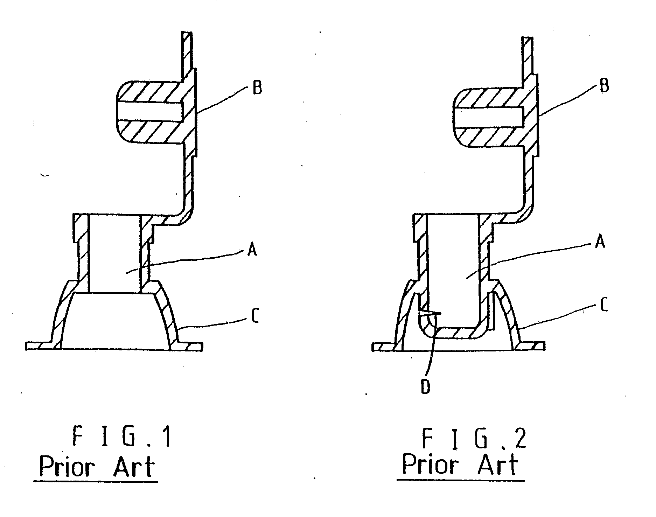

Regular air nozzles include two types. One is as illustrated in Figure 1 which has a hollow air hole (A) for inlet or outlet of air. When to use this type of air nozzle one may encounter some problems as hereunder: When to blow air by mouth, one should have to quickly squeeze the air hole (A) tight during breathing or the inner air would be exhausted rapidly. Because the body of the air hole (A) is a short and hollow cylinder, it is very difficult to squeeze with fingertips. When to cover the plug (B) after blowing, one should have to squeeze the air hole (A) with fingers again, and to quickly cover the plug (B) before a big amount of air is exhausted. Therefore, it is very difficult to let an inflatable article be fully inflated.

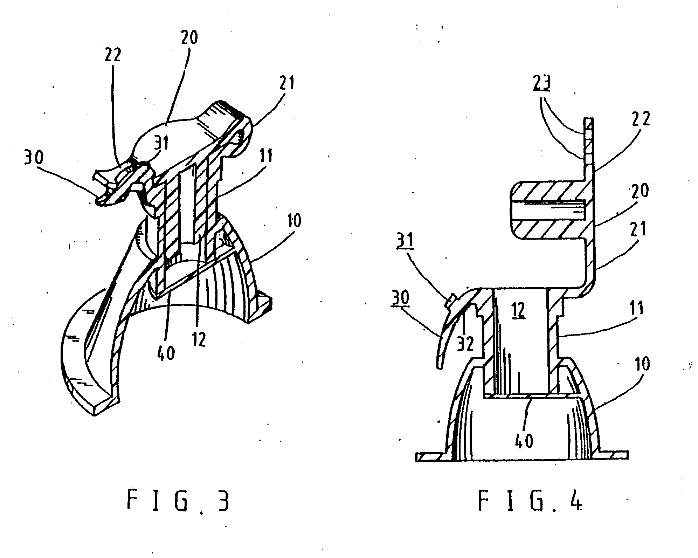

Another type of air nozzle is as illustrated in Figure 2 wherein the air hole (A) comprises a gap (D) near the bottom for exhaustion of inner air or blowing of outer air therethrough. This type of air nozzle will also provide some disadvantages during application. When to blow air by mouth, one should have to squeeze the air hole (A) with fingers to let the gap (D) be opened to provide a passage for air to blow therein. During breathing, the fingers must be left away from the air hole (A) to prevent from exhaustion of inner air through the gap (D). Therefore, the operation of the fingers must be kept up with the blowing of the mouth, and the fingers must be released from the air hole (A) each time after blow. If the process is not harmoniously met, exhaustion of inner air may occur during blowing. Because the size of the gap (D) is limited to a strict range, one may consumes maximized labor to blow minimized air into the inflatable body. Therefore, it requires a lot of time to fully inflate the inflatable body. It is more particularly difficult to a child to squeeze the air hole (A) with fingers during blowing by mouth. When to exhaust the inner air of such an inflatable article, one should have to squeeze the air hole (A) and to press on the inflatable body. Then, the inner air will be exhausted slowly.

As above-described, regular air nozzles of the prior art are not very convenient to operate. In view of said problems, an improvement on the structure of air nozzle is made by the present inventor to provide better performance.

The main object of the present invention is to provide an improved structure of air nozzle for inflatable articles wherein a radial non-return diaphragm is provided to cover the bottom passage of the air hole by means of its elasticity and the pressure difference between inner and outer air so as to prevent from exhaustion of inner air.

Another object of the present invention is to provide an improved structure of air nozzle for inflatable articles wherein a self-locking belt is provided to reinforce the connection of the plug with the air hole of the nozzle so as to prevent the plug from breaking away and to secure maximum safety during operation.

A yet further object of the present invention is to provide an improved structure of air nozzle for inflatable articles wherein the non-return diaphragm and the self-locking belt are integrally made with the nozzle body into one unit by means of a shape-forming process.

In general, as above-described, the present invention is to provide an air nozzle which comprises an non-return diaphragm at the bottom of the air hole, like a structure similar to regular pneumatic/hydraulic control equipments, to control inlet and outlet of the inner air of the inflatable article, and which comprises a self-locking belt extended from its circular outer wall for insertion into the two holes of the front extension of the plug, having a nose and a serrated surface made thereon to prohibit the plug from breaking away so as to prevent from exhaustion of inner air.

These and other features and objects of the present invention will become apparent to those skilled in the art after reading the detailed description provided hereinbelow, with appropriate reference to the accompanying drawings.

Figure 1 shows a plain sectional view of a conventional air nozzle.

Figure 2 shows a plain sectional view of another conventional air nozzle.

Figure 3 shows a sectional structural view of the present invention.

Figure 4 shows a plain sectional view of the present invention.

Figure 5 shows a preferred embodiment constructed according to the present invention, illustrating a mode to blow air into the inflatable body.

Figure 6 illustrates the status of the preferred embodiment of Figure 5 when it is inflated.

Figure 7 shows the fastening of the self-locking belt.

Figure 8 illustrates the status of the preferred embodiment of Figure 5 when inflated air is exhausting.

Referring to the annexed drawings, an air nozzle is comprised of an horn-shaped nozzle seat (10) having bigger diameter at the lower portion, upward extension to form a circular wall (11). Said circular wall confines an air hole (12) thereinside. A plug (20) which is integrally connected with said circular wall (11) by means of a connecting leaf (21) is provided to set in said central air hole (12) of said circular wall (11). The plug extension (22) of said connecting leaf (21) is arranged to provide two holes (23). A self-locking belt (30) which is integrally extended from the top edge of said circular wall (11) on the opposite side against said connecting leaf (21) comprises a nose (31) on the one side thereof and a serrated surface (32) on the side opposite to the nose (31). A non-return diaphragm (40) is extended from the inner wall of said nozzle seat (10) along radial direction to properly cover the bottom end of said air hole (12) so as to prevent reverse flow of inflated air from air hole (12) unless said nozzle seat is pressed downward to let said non-return diaphragm (40) break away from the bottom end of said air hole (12) for air exhaust.

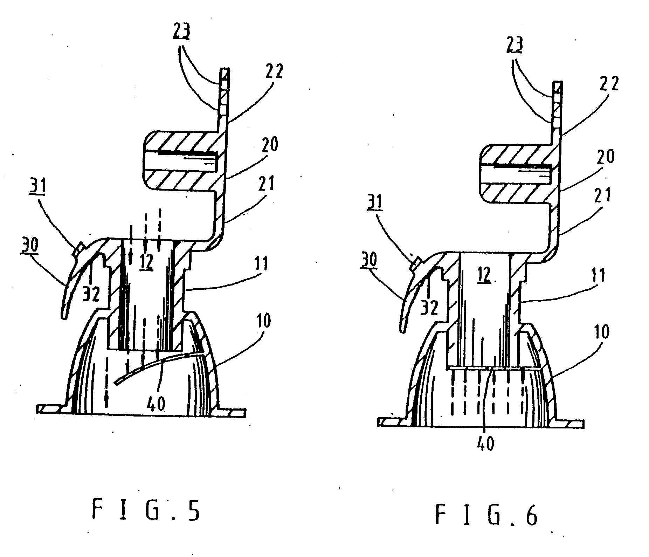

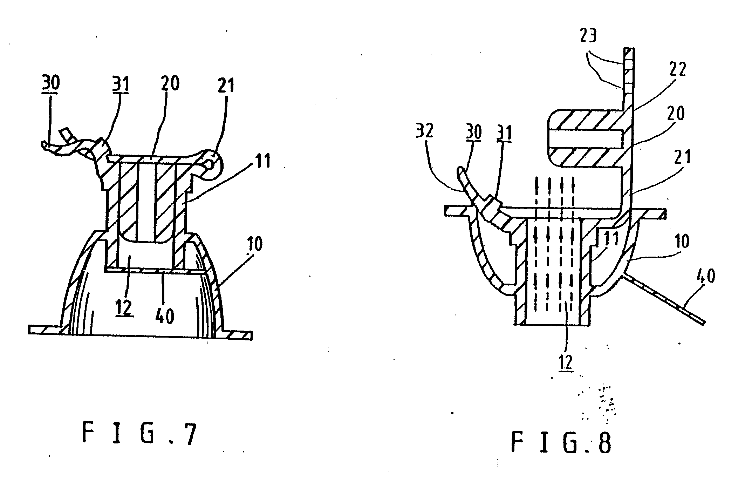

The above-described configuration of air nozzle is made of PVC or some other similar plastic materials. While in application, as illustrated in Figure 5, it is to directly blow air from the air hole (12) to let air current push the non-return diaphragm (40) open for entrance of air flow. Because the non-return diaphragm (40) is integrally made with the inner wall of the nozzle seat (10) by means of injection molding process, its property of elasticity will automatically force itself to return to original position to cover the bottom end of the air hole (12) as soon as the blowing process is stopped. At this moment, the inner pressure of the inflatable body is much higher than the outer pressure, and therefore, the inner air will try to run through the air hole (12) to equilibrate with the outer air. However, the inner air pressure forces the non-return diaphragm (40) to tightly cover the bottom end of the air hole (12) to prohibit extrusion of inner air (as illustrated in Figure 6). Therefore, it is very practical and easy to blow air into the inflatable body without worrying about exhaustion of inner air during breathing. In comparison with the air nozzle of the prior art, the present invention is more practicable for reciprocating blowing of air. When the inflatable body is fully inflated, the plug (20) is set in the air hole (12), and the self-locking belt (30) is inserted through the holes (23) of the front extension (22) of the plug (20) to let the plug (20) be tightly affixed to the air hole (12) (as illustrated in Figure 7). Therefore, by means of the arrangement of the self-locking belt (30), the plug (20) will not break away from the air hole (12) against impact pressure. Please refer to Figure 8 for the operation to exhaust the air from the inflated body. The front extension (22) of the plug (20) is pulled upward to let the the holes of the plug extension (22) be opened wider for unbinding of the self-locking belt (30). As soon as the self-locking belt (30) is untied, the plug (20) is pulled out and the nozzle is pressed downward to force the non-return diaphragm (40) automatically break away from the bottom end of the air hole (12), such that the inner air is automatically exhausted outward through the air hole (12). According to the present invention, the serrated surface (32) and the nose (31) of the self-locking belt (30) may be made on the belt (30) at any position according to molding tools or preference.

As indicated the structure herein may be various embodied. Recognizing various modifications will be apparent, the scope hereof shall be deemed to be defined by the claims as set forth below.

**Claims**

1. An improved structure of air nozzle for inflatable articles comprising:
- a nozzle seat having upward extension to form a circular wall with an air hole provided therein;
- a plug being to set in said air hole of said circular wall, integrally connected with said circular wall by means of a connecting leaf, and a front extension having two holes made thereon from the plug; and
- a self-locking belt made on the outer wall of said air hole;
characterized in that:
a non-return diaphragm is extended from the inner wall of said nozzle seat along radial direction to properly cover the bottom end of said air hole so as to control the passage of said air hole; said self-locking belt comprising a nose on the one side and a serrated surface on the other side surface, being inserted through said holes of said front extension of said plug to tightly tie up said plug with said nozzle.

2. An improved structure of air nozzle for inflatable articles according to Claim 1 wherein said self-locking belt comprises a nose on the one side for snap connection with said plug, a serrated surface on the other side to provide antiskid effect while snapping; said nose and said serrated surface being selectably made on said self-locking belt at any preferred positions according to user's preference.

3. An improved structure of air nozzle for inflatable articles according to Claim 1 wherein said non-return diaphragm and said self-locking belt are integrally made with said nozzle seat by a shape-forming process.

4. An improved structure of air nozzle substantially as hereinbefore described with reference to and as shown in the accompanying drawings.

F I G . 1
Prior Art

F I G . 2
Prior Art

EP 0 373 818 A2

FIG. 4

FIG. 3

FIG.6

FIG.5

F I G . 7

F I G . 8

EP 0 373 818 A2